# EUROPÄISCHE PATENTSCHRIFT

(11) **EP 1 910 728 B1**
(45) Veröffentlichungstag und Bekanntmachung des Hinweises auf die Patenterteilung: **09.09.2009**
(21) Anmeldenummer: 06778088.2
(22) Anmeldetag: 31.07.2006
(51) Int. Cl.: F16L 15/04, F16B 33/00, F16B 33/06, E21B 17/08

(54) **VERBINDUNGSELEMENT ZUM HERSTELLEN EINER FLUIDDICHTEN SCHRAUBVERBINDUNG SOWIE VERFAHREN ZU DESSEN HERSTELLUNG**
CONNECTION ELEMENT FOR PRODUCING A FLUID-TIGHT SCREW CONNECTION, AND METHOD FOR THE PRODUCTION THEREOF
ELEMENT D'ASSEMBLAGE POUR ASSEMBLAGE PAR VISSAGE, ETANCHE AUX FLUIDES ET PROCEDE PERMETTANT DE LE PRODUIRE

(30) Priorität: 29.07.2005 DE 102005036343
(43) Veröffentlichungstag der Anmeldung: 16.04.2008
(73) Patentinhaber: Viega GmbH & Co. KG, 57439 Attendorn (DE)
(72) Erfinder: VIEGENER, Walter, 57439 Attendorn (DE)
(74) Vertreter: Cohausz & Florack
(86) Internationale Anmeldenummer: PCT/EP2006/064872
(87) Internationale Veröffentlichungsnummer: WO 2007/012673

(56) Entgegenhaltungen:
- WO-A-00/57070
- CH-A- 557 499
- DE-A1- 19 528 849
- DE-C1- 3 703 052
- DE-U- 7 409 347
- US-A- 2 928 446
- US-A- 3 101 207
- US-A- 3 182 702
- US-A- 3 687 493

## Beschreibung

Die Erfindung betrifft ein Verbindungselement zum Herstellen einer fluiddichten Schraubverbindung, mit einem Gewinde, mit einem von einem Gewindegrund und benachbarten Gewindeflanken begrenzten Gewindegang, mit einem wenigstens über einen vollständigen Umlauf des Gewindegangs angeordneten Dichtmittel, wobei zwischen dem Dichtmittel und dem Gewindegang eine Haftverbindung ausgebildet ist. Ein derartiges Verbindungselement ist beispielsweise aus der WO 00/57070 bekannt. Ferner betrifft die Erfindung ein Rohrstück für eine fluiddichte Rohrleitung mit wenigstens zwei Anschlussenden sowie eine Armatur für einen fluiddichten Anschluss mit wenigstens einem Anschlussende. Die Erfindung betrifft darüber hinaus auch ein Verfahren zur Herstellung eines Verbindungselements.

In einer Vielzahl von Anwendungsfällen sind fluiddichte Schraubverbindungen erforderlich, um ein Austreten von Flüssigkeiten oder Gasen aus einem geschlossenen System zu verhindern. Während hierfür teilweise Flachdichtungen oder metallisch dichtende Gewinde eingesetzt werden, ist in der Praxis häufig auch die Verwendung von Gewindedichtungen bevorzugt. Die Gewindedichtungen bestehen in der Regel aus Hanf oder Teflon und werden vor dem Verschrauben um ein Außengewinde der Schraubverbindung gewickelt. Die Hanffasern bzw. das Teflon, welches in Form von dünnen Bändern verwendet wird, gelangt bei richtiger Anwendung in den Zwischenraum zwischen dem Außengewinde und dem Innengewinde der Schraubverbindung und dichtet diesen Zwischenraum gegenüber einem Durchtritt von Gasen oder Flüssigkeiten ab.

Das Anbringen von Hanf oder Teflonbändern zu Dichtzwecken ist mit einem hohen Zeitaufwand verbunden. Zudem können auch bei höchster Sorgfalt spätere Undichtigkeiten nicht ausgeschlossen werden. Daher ist im Stand der Technik ein Verbindungselement vorgeschlagen worden, dessen Außengewinde mit einer Polyamidschicht überzogen ist Derartige thermoplastische Dichtmittel wie Polyamid weisen eine Reihe von Nachteilen auf. Ein wesentlicher Nachteil besteht darin, dass die bekannten Dichtmittel keine dauerhafte Elastizität aufweisen. Die bekannten Dichtmittel werden also mit der Zeit spröde, so dass sie nach und nach ihre Dichtmitteleigenschaften verlieren. Höhere Temperaturen oder gar größere Schwankungen der Temperatur, durch die das Dichtmittel abwechselnd aufgeheizt und wieder abgekühlt wird, begünstigen noch das Verspröden des Dichtmittels und damit das Auftreten von Undichtigkeiten.

Ein weiterer, insbesondere thermoplastische Dichtmittel betreffender Nachteil ist, dass diese nur bis zu einer Temperatur von etwa 70 °C bis 100 °C einsetzbar sind. Dieser Temperaturbereich fällt etwa mit den maximal zulässigen Betriebstemperaturen der gebräuchlichsten Leitungstypen zusammen. Während die maximalen Betriebstemperaturen von Erdgasleitungen bei 70 °C liegen, betragen die gleichen Temperaturen von Trinkwasserleitungen 95 °C und von Heizungsrohren 110 °C. Sicherheiten für die Funktionsfähigkeit thermoplastischer Dichtmittel kann für diese und vergleichbare Anwendungen also in der Regel nicht übernommen werden.

Ein weiterer Nachteil liegt in der geringen mechanischen Belastbarkeit der Dichtmittels. Gerade Lacke oder Harze werden beim Transport oder durch unsachgemäße Handhabung leicht beschädigt. Auch dies führt häufig zu Undichtigkeiten. Zudem ist der Einsatz von Polyamid oder Epoxydharz als Dichtmittel auf ganz bestimmte Anwendungen begrenzt.

Der vorliegenden Erfindung liegt daher das technische Problem zugrunde, ein Verbindungselement, ein Rohrstück und eine Armatur zur Verfügung zu stellen, bei denen die aus dem Stand der Technik bekannten Nachteile nicht oder zumindest weniger deutlich auftreten. Ein weiteres der Erfindung zugrunde liegendes technisches Problem besteht darin, ein verfahren vorzuschlagen, mit dem das Verbindungselement der eingangs genannten Art ohne weiteres hergestellt werden kann.

Das zuvor aufgezeigte technische Problem wird bei einer Schraubverbindung der eingangs genannten Art erfindungsgemäß durch ein Verbindungselement mit den Merkmalen des Anspruchs 1 gelöst. Das technische Problem wird auch durch ein Verbindungselement zum Herstellen einer fluiddichten Schraubverbindung einer Leitung mit den Merkmalen des Anspruches 35 gelöst. Ferner wird das technische Problem bei einem Rohrstück der eingangs genannten Art erfindungsgemäß durch die Merkmale des Anspruchs 38 gelöst. Zudem wird das technische Problem bei der eingangs genannten Armatur erfindungsgemäß durch die Merkmale des Anspruchs 39 gelöst. Darüber hinaus wird das technische Problem bei dem eingangs genannten Verfahren erfindungsgemäß durch die Merkmale des Anspruchs 40 gelöst.

Bei dem erfindungsgemäßen Verbindungselement ist ein Dichtmittel vorgesehen, das ein Material ausgewählt aus der folgenden Gruppe enthält und/oder aus mindestens einem dieser Materialien besteht:
Silikone, Fluorpolymere, insbesondere Perfluoralkoxypolymere, Epoxidharze und Polyurethane. Das Dichtmittel kann ferner ein Elastomer, vorzugsweise ein thermoplastisches Elastomer enthalten und/oder daraus bestehen.

Die angegebenen Materialien für das Dichtmittel haben bevorzugt jeweils eine Härte von 10 bis 110 IRHD, vorzugsweise 30 bis 90 IRHD, noch bevorzugter 40 bis 80 IRHD und am bevorzugtesten 55 bis 75, wobei diese Härteangaben auf das reine Polymermaterial ohne Zusatz der weiter unten beschriebenen Füllstoffe. Die Abkürzung IRHD steht für International Rubber Hardness Degree. Die angegebenen Materialien für das. Dichtmittel haben ferner bevorzugt jeweils ein Quellmaß in entmineralisiertem Wasser von 1 bis 20 % (m), vorzugsweise 3 bis 15 % (m) und am bevorzugtesten 3,5 bis 12,5 %, gemessen an 20x60x2 mm³ großen Filmstücken in entmineralisiertem Wasser bei 40 °C nach 48 Stunden.

Silikone sind dem Fachmann grundsätzlich bekannt und beispielsweise in "Römpp Chemie Lexikon, 9. Auflage, 1993, Seiten 4168-4172" beschrieben. Systematisch werden die Silikone als Polyorganosiloxane bezeichnet. Der Einsatz von Silikonen als Dichtmittel ist deshalb vorteilhaft, da Silikone temperaturstabil, langzeitflexibel, wärmebeständig, hydrophob und physiologisch verträglich sind. Erfindungsgemäß können lineare Polysiloxane, verzweigte Polysiloxane, cyclische Polysiloxane und/oder vernetzte Polysiloxane eingesetzt werden. Besonders bevorzugt ist der Einsatz von Silikonkautschuken und Silikonharzen, da diese eine hohe Dauerwärmebeständigkeit sowie weitgehend temperaturunabhängige dielektrische Werte aufweisen. Ebenfalls besonders bevorzugt ist der Einsatz von elastomeren Silikonen. Die Herstellung von Silikonen ist dem Fachmann grundsätzlich bekannt und kann beispielsweise über Hydrolyse und Polykondensation von Dialkyldichlorsilanen erfolgen. Weitere Herstellungsverfahren sind in "Römpp Chemie Lexikon, 9. Auflage, 1993, Seiten 4168-4172" beschrieben. Fluorpolymere sind dem Fachmann grundsätzlich bekannt und beispielsweise in "Römpp Chemie Lexikon, 9. Auflage, 1993, Seite 1412" beschrieben. Der Einsatz von Fluorpolymeren als Dichtmittel ist deshalb vorteilhaft, da Fluorpolymere inert sind und sich außerdem durch hohe chemische und thermische Stabilität, sehr gute elektrische Isoliereigenschaften, hervorragende Witterungsbeständigkeit, antiadhäsives Verhalten und Unbrennbarkeit auszeichnen. Erfindungsgemäß können sowohl Fluor enthaltende Polymere mit ausschließlich Kohlenstoff-Atomen in der Hauptkette als auch solche mit Heteroatomen in der Hauptkette eingesetzt werden. Werden Fluor enthaltende Polymere mit ausschließlich Kohlenstoff-Atomen in der Hauptkette eingesetzt, so sind Homo-'und Copolymere olefinisch ungesättigter fluorierter Monomere besonders bevorzugt, insbesondere Chlortrifluorethylen, Fluorvinylsulfonsäure, Hexafluorisobutylen, Hexafluorpropylen, Perfluorvinylmethylether, Tetrafluorethylen, Vinylfluorid und Vinylidenfluorid. Werden Fluor enthaltende Polymere mit Heteroatomen in der Hauptkette eingesetzt so sind Polyfluorsilicone und Polyfluoralkoxyphosphazene besonders bevorzugt. Insbesondere bevorzugt ist der Einsatz von Perfluoralkoxypolymeren. Ebenfalls besonders bevorzugt ist der Einsatz von elastomeren Fluorpolymeren. Die Herstellung von Fluorpolymeren ist dem Fachmann grundsätzlich bekannt und kann beispielsweise über Emulsions- bzw- Suspensionscopolymerisation von Tetrafluorethylen und Perfluorpropylvinylether erfolgen. Weitere Herstellungsverfahren sind in "Römpp Chemie Lexikon, 9. Auflage, 1993, Seite 1412" beschrieben.

Epoxidharze sind dem Fachmann grundsätzlich bekannt und beispielsweise in "Römpp Chemie Lexikon, 9. Auflage, 1993, Seite 1196" beschrieben. Der Einsatz von Epoxidharzen als Dichtmittel ist deshalb vorteilhaft, da Epoxidharze flexibel, chemikalienresistent und meist raumtemperaturhärtend sind. Erfindungsgemäß besonders bevorzugt ist der Einsatz von Reaktionsprodukten des Epichlorhydrins mit o-Kresol- bzw. Phenol-Novolaken. Ebenfalls besonders bevorzugt ist der Einsatz von elastomeren Epoxidharzen. Die Herstellung von Epoxidharzen ist dem Fachmann grundsätzlich bekannt und kann beispielsweise über Polyaddition von Di- bzw. Polyoxiranverbindungen mit Di- bzw. Polyaminen, Di- bzw. Polyolen, Di- bzw. Polysäuren und/oder Oxiranen erfolgen. Weitere Herstellungsverfahren sind in "Römpp Chemie Lexikon, 9. Auflage, 1993, Seite 1196" beschrieben.

Polyurethane sind dem Fachmann grundsätzlich bekannt und beispielsweise in "Römpp Chemie Lexikon, 9. Auflage, 1993, Seiten 3575-3577" beschrieben. Der Einsatz von Polyurethanen als Dichtmittel ist deshalb vorteilhaft, da Polyurethane chemikalienresistent sind und eine sehr geringe Reibung bei der Montage aufweisen, wenn sie angefeuchtet sind. Erfindungsgemäß besonders bevorzugt ist der Einsatz von Polyurethan-Harzen, da diese eine hohe Trocknungsgeschwindigkeit und Hydrolysebeständigkeit aufweisen. Erfindungsgemäß ebenfalls besonders bevorzugt ist der Einsatz von Polyurethan-Kautschuken, da diese eine hohe Abriebs- und Reißfestigkeit sowie ausgezeichnete Öl- und Oxidätions-Beständigkeit aufweisen. Ebenfalls besonders bevorzugt ist der Einsatz von elastomeren Polyurethanen. Die Herstellung von Polyurethanen ist dem Fachmann grundsätzlich bekannt und kann beispielsweise über Polyaddition von Isocyanaten an Di- und Polyole, Di- und Polyamine und/oder Di- und Polycarbonsäuren erfolgen. Weitere Herstellungsverfahren sind in "Römpp Chemie Lexikon, 9. Auflage, 1993, Seiten 3575-3577" beschrieben.

Elastomere und thermoplastische Elastomere sind dem Fachmann grundsätzlich bekannt und beispielsweise in "Römpp Chemie Lexikon, 9. Auflage, 1993, Seiten 1105-1107, 4570-4571" beschrieben. Der Einsatz von Elastomeren als Dichtmittel des erfindungsgemäßen Verbindungselements ist deshalb vorteilhaft, da Elastomere einfach appliziert werden können. Erfindungsgemäß besonders bevorzugt ist der Einsatz von thermoplastischen Elastomeren, da diese einfach verarbeitbar sind. Die Herstellung von Elastomeren ist dem Fachmann grundsätzlich bekannt und kann beispielsweise über Polyaddition von Isocyanaten an Diole, Diamine und/oder Dicarbonsäuren erfolgen. Weitere Herstellungsverfahren sind in "Römpp Chemie Lexikon, 9. Auflage, 1993, Seiten 1105-1107, 4570-4571" beschrieben.

Die zuvor angegebenen Materialien haben sich als vorteilhaft für die Beschichtung von Gewinden herausgestellt. Mit ihnen lässt sich jeweils eine Verbindung herstellen, die dauerhafte Dichteigenschaften hat. Da diese Materialien auch hitzebeständig sind, können diese bei den oben genannten Anwendungen in der Haustechnik eingesetzt werden. Diese sind Trinkwasserrohre, Heizungsrohre und Erdgasleitungen.

Die genannten Kunststoffe und Kunstharze haften sehr gut im Gewindegang des Gewindes, so dass ein ungewolltes Ablösen und eine Verlegung des Dichtmittels in den Außenbereich der Schraubverbindung, wo das Dichtmittel keine dichtende Wirkung entfaltet, vermieden wird.

Gleichzeitig weisen die genannten Materialien vorteilhafte Elastizitätswerte auf. Diese stellen sicher, dass sich das Dichtmittel an das Innen- und das Außengewinde der Schraubverbindung anschmiegt und den entsprechenden Zwischenraum umlaufend ausfüllt. Dabei ist das Dichtmittel so widerstandsfähig gegenüber mechanischen, auf die Schraubverbindung einwirkenden Belastungen, dass Undichtigkeiten auch über lange Zeiträume verhindert werden können.

In bevorzugter Weise können die zuvor genannten Materialien auch als Mischungen verwendet werden, um deren Eigenschaften in geeigneter Weise zu kombinieren.

Unter den genannten Materialien wird vorliegend jeweils ein Kunststoff oder Kunstharz verstanden, der neben der jeweiligen Hauptkomponente noch weitere Nebenkomponenten, vorzugsweise in Form von Zusätzen oder Additiven, aufweisen kann, um die relevanten physikalischen und/oder chemischen Eigenschaften wie etwa die Haftung im Gewindegang, die Elastizität, die chemische Beständigkeit und/oder die Temperaturbeständigkeit zu verbessern.

Nichtsdestotrotz kann bei einer bevorzugten Ausführungsform das Dichtmittel auch lediglich aus einem der genannten Materialien bestehen oder eine Mischung davon sein. Dies vereinfacht nicht nur den Herstellungsaufwand, sondern sorgt auch dafür, dass das Dichtmittel universeller eingesetzt werden kann.

Die Eigenschaften des Dichtmittels werden in positiver Weise für die jeweilige Anwendung auch dadurch verbessert, dass ein geeigneter Füllstoff dem Dichtmittel zugefügt wird. Füllstoffe können insbesondere ein Aufreiben, Zerquetschen sowie anderweitiges Zerstörten der die Dichtfunktion erfüllenden Kunststoffe bzw. Kunstharze verhindern.

Der Füllstoff besteht zumindest teilweise aus Fasern. Dadurch wird in vorteilhafter Weise erreicht, dass das dauerhaft mit dem Gewinde verbundene Dichtmittel Fasereigenschaften aufweist, die bei der Anwendung von Hanf, wie sie oben beschrieben worden ist, von Vorteil sind.

Dabei ist es bevorzugt, dass die Fasern Wolle, Cellulose, Polyamid, Carbon, Glas und/oder Polyimid enthalten und/oder aus mindestens einem dieser Materialien bestehen.

Vorteilhaft an der Verwendung von Wolle ist, dass wolle chemikalienresistent ist sowie Reibungsanisotropie aufweist. Vorteilhaft an der Verwendung von Cellulose ist, dass Cellulose quellbar ist. Vorteilhaft an der Verwendung von Polyamid ist, dass Polyamid stabil ist und einen guten Verbund zu Harzen/Kunststoffen ausbildet.

Vorteilhaft an der Verwendung von Carbon ist, dass Carbon hochfest und chemikalienresistent ist. Vorteilhaft an der Verwendung von Glas ist, dass Glas steif und hygienisch einwandfrei ist und zudem einen guten Verbund zum Harz ausbildet. Vorteilhaft an der Verwendung von Polyimid ist, dass Polyimid hochfest und chemikalienresistent ist.

Ebenso können die Fasern teilsynthetische Fasern enthalten, beispielsweise geschlichtete Naturfasern. Die Beschichtung der natürlichen Materialien bewirkt eine bessere Anbindung der Fasern an das Dichtmittel.

Dieses gilt in gleicher Weise für Füllstoffe, die silanisiertes Pulver und/oder aus geprimerten Sand enthalten. Vorteilhaft an der Verwendung dieser Materialien ist, dass sie einen guten Verbund zum Harz/Kunststoff ausbilden.

Darüber hinaus ist es vorteilhaft, wenn der Füllstoff Filze, Pulver oder Flocken aufweist, die ebenfalls aus den zuvor genannten Materialien bestehen können.

Vorteilhaft an der Verwendung von Filz ist, dass es gut durchdringbar ist und deshalb einen guten Verbund zum Harz/Kunststoff ausbildet. Vorteilhaft an der Verwendung von Pulver ist, dass es im Harz/Kunststoff besser zu homogenisieren ist als andere Zuschlaggeometrien sowie beim Einschrauben kaum beschädigt wird. Vorteilhaft an der Verwendung von Flocken ist, dass sie flexibel sind und eine hohe Festigkeit im komprimierten Zustand aufweisen.

Darüber hinaus ist es möglich, als Füllstoff Mikropartikel zu verwenden, deren Abmessungen im Mikrometerbereich oder auch im Sub-Mikrometerbereich liegen können. Durch die geringen Abmessungen lässt sich eine sehr homogene Verteilung des Füllstoffs im Dichtmittel erreichen, so dass durch den Füllstoff hervorgerufene Eigenschaft im gesamten Dichtmittel gleichmäßig vorhanden ist. Dieses ist insbesondere für eine gleichmäßige Abdichtung von Vorteil.

In weiter bevorzugter Weise kann der Füllstoff Mikrokapseln aufweisen, die einen Zusatzstoff enthalten und die durch die mechanischer Beanspruchung durch Reibung und Scherkräfte beim Verschrauben des Gewindes aufplatzen und den Zusatzstoff abgeben. Dadurch kann während der Anwendung des Gewindes ein physikalischer oder chemischer Prozess durch die Zusatzstoffe eingeleitet werden, die erst während des Verschraubens freigesetzt werden.

Dabei ist es bevorzugt, dass die Mikrokapseln einen Klebstoff, insbesondere einen Reaktivklebstoff enthalten. Der Klebstoff kann eine bessere Haftung des Dichtmittels nicht nur an dem Innengewinde hervorrufen, an dem der Dichtmittel bereits aufgebracht gewesen ist, sondern durch den Klebstoff kann auch eine bessere Haftung mit dem aufgeschraubten Gewindeteil erreicht werden.

Als Klebstoffe kommen sämtliche bekannten Klebstoffe in Frage. Dieses können Einkomponenten-Klebstoffe sein, die von sich aus bei ihrer Freisetzung ihre Klebkraft entfalten. Es kann aber auch bspw. eine Komponente eines Zweikomponenten-Klebstoffes in den Mikrokapseln enthalten sein, die beim Verschrauben des Gewindes aus den Mikrokapseln austritt und dann mit einer weiteren Komponente, die entweder im Dichtmittel vorhanden ist oder aus dem Material des Gewindes austritt, reagiert. Somit wird die Beständigkeit der Dichtung, die durch das Dichtmittel hervorgerufen werden soll, weiter verbessert.

Eine weitere Alternative der Anwendung von Mikrokapseln besteht darin, dass die Mikrokapseln eine Komponente zum Aufschäumen aufweisen. Dadurch kann beim Verschrauben ein Aufschäumen des Dichtmittels initiiert werden, wodurch der sich zwischen den beiden Gewindeteilen befindliche Zwischenraum noch besser mit dem Dichtmittel ausgefüllt werden kann. Beispielsweise können damit Fehlstellen ausgebessert werden, die durch die mechanische Beanspruchung des Dichtmittels beim Zusammenschrauben der Gewinde entstehen können.

Darüber hinaus ist es unabhängig von der Anwendung von Mikrokapseln vorteilhaft, wenn das Dichtmittel selbst in aufgeschäumter Form auf dem Gewinde vorliegt. Dadurch ergibt sich eine größere Elastizität des Dichtmittels, wodurch die Zwischenräume zwischen den Gewindeteilen besser ausgefüllt werden können. Durch die Elastizität des Dichtmittels wird auch eine größere Beständigkeit der Schraubverbindung erreicht.

Ein weiterer Füllstoff, der dem Dichtmittel beigefügt werden kann, besteht in einem Gleitmittel. Dabei ist es bevorzugt, dass das Gleitmittel plättchenförmige Partikel, insbesondere Polyolefinteilchen oder Talkumteilchen aufweist. Durch das Gleitmittel weist das Dichtmittel einen geringeren Reibungskoeffizienten auf, wodurch das Einschrauben in das Gegengewinde erleichtert wird und das Zerreißen des Dichtmittels, bspw. aufgrund von Haftungsphänomenen an den Gewindeflanken beim Einschrauben und ggf. beim Rückdrehen verhindert wird.

Eine weitere Alternative eines Füllstoffes besteht darin, dass das Dichtmittel Spanbrecher aufweist. Beim Verschrauben der beiden Gewindeteile entstehen langgestreckte lange, feste Fäden oder Späne, die aus dem Dichtmittel herausgetrennt werden, die in einem zusätzlichen Arbeitsgang entfernt werden müssen. Um diese langen Späne zu verhindern, wird der Spanbrecher eingesetzt. In vorteilhafter Weise weist der Spanbrecher feste Mikropartikel mit einer geringen Adhäsion zum Material des Dichtmittels auf, insbesondere enthaltend Polytetrafluorethylen (PTFE), Polyolefine und Schichtsilikate.

Eine weitere bevorzugte Ausgestaltung des Dichtmittels besteht darin, dass dieses mindestens zwei Schichten aufweist, die sich in mindestens einer Eigenschaft unterscheiden. Somit kann das Dichtmittel einerseits im Bereich der Anlagefläche des Gewindes so eingestellt werden, dass eine gute Haftung an der Gewindefläche erreicht wird. Andererseits kann das Dichtmittel im Bereich des Zusammenwirkens mit dem anderen Gewindeteil beispielsweise hinsichtlich der spanbrechenden Eigenschaften, hinsichtlich der Elastizitätseigenschaften und/oder hinsichtlich des Reibungskoeffizienten eingestellt werden.

In einer ersten Ausgestaltung können die mindestens zwei Schichten unterschiedlich hart sind, wobei beide sich daraus ergebenden Alternativen jeweils ihre Vorteile haben.

Bevorzugt ist es, dass die dem Gewinde nahe Schicht, also die Grundschicht härter ist als die vom Gewinde abgewandte Schicht, also die Deckschicht. So bedingt eine harte Grundschicht des Dichtmittels eine bessere lokale Fixierung an der Gewindeoberfläche. Eine weiche flexiblere Deckschicht erhöht die Dichtwirkung zum Gegengewinde. Die Grundschicht hat dabei bevorzugt eine Härte von 50 bis 100 IRHD, vorzugsweise 60 bis 90 IRHD, speziell etwa 80 IRHD. Die Deckschicht hat bevorzugt eine Härte von 20 bis 70 IRHD, vorzugsweise 40 bis 60 IRHD, speziell etwa 50 IRHD. Die Abkürzung IRHD steht für International Rubber Hardness Degree.

Ist dagegen die dem Gewinde nahe Schicht weicher als die vom Gewinde abgewandte Schicht, so kann damit ein geringeres Drehmoment aufgrund einer geringeren Reibung zwischen den Gewindeteilen erreicht werden.

Eine mögliche Ausgestaltung des Schichtaufbaus des Dichtmittels kann also darin bestehen, dass die dem Gewinde nahe Schicht Füllstoffe zur Einstellung der Härte aufweist und dass die vom Gewinde abgewandte Schicht Füllstoffe in Form von Spanbrechern und/oder Gleitmitteln aufweist.

Der zuvor beschriebene Schichtaufbau des Dichtmittels kann einerseits darin bestehen, dass die mindestens zwei Schichten jeweils als separate, jedoch miteinander verbundene Schichten ausgebildet sind. Es kann jedoch besonders vorteilhaft sein, wenn die mindestens zwei Schichten gradientenförmige Übergänge zueinander aufweisen. In diesem Fall ergibt sich aufgrund der Gradientenbildung ein homogenerer Aufbau, so dass mindestens zwei Schichten sich nicht voneinander lösen, wenn beispielsweise Scherkräfte beim Verschrauben der Gewindeteile auftreten.

Das Dichtmittel ist zuvor hinsichtlich seiner Zusammensetzung im Detail anhand verschiedener Ausführungsbeispiele erläutert worden. Ein weiterer Aspekt der vorliegenden Erfindung besteht darin, in welcher Weise das Mittel nach dem Auftragen auf das Gewinde dauerbelastbar und standfest gemacht wird. Dazu wird vorgeschlagen, dass das Dichtmittel durch Temperaturerhöhung oder durch Bestrahlung, insbesondere UV-Bestrahlung ausgehärtet wird.

Insbesondere wird das Dichtmittel einen bei einer Temperatur größer als die Betriebstemperatur der Leitung aushärtbaren Kunststoff oder Kunstharz aufweisen. Dieser Kunststoff oder Kunstharz weist im ausgehärteten Zustand eine ausreichende Elastizität auf, um die Anforderungen an die Dichtungseigenschaften über einen langen Zeitraum zu erfüllen.

Unter Betriebstemperatur wird hier einerseits eine allgemeingültige, maximale Betriebstemperatur und andererseits eine Betriebstemperatur verstanden, die unter gewöhnlichen Umständen im Betrieb nicht überschritten wird oder aus welchen Gründen auch immer nicht überschritten werden sollte.

Allgemeingültige maximale Betriebstemperaturen sind insbesondere für Erdgas-, Trinkwasser- und Warmwasserleitungen festgeschrieben. Auch in anderen Fällen kann eine maximale Betriebstemperatur festgeschrieben sein, was einerseits mit der Belastbarkeit des Materials der Leitung oder mit sicherheitstechnischen Bestimmungen zu tun haben kann.

Letztlich gibt es auch noch den Fall, dass höhere Temperaturen zwar zulässig wären, aufgrund gegebener Randbedingungen eine maximale Temperatur aber nicht überschritten wird bzw. überschritten werden kann. Derartige Leitungen finden insbesondere in der chemischen Industrie, der Energietechnik und ähnlichen Branchen Verwendung.

Bei welchen Temperaturen das Dichtmittel ausgehärtet wird, ist in starkem Maße von der jeweiligen Zusammensetzung des Dichtmittels abhängig, wobei die Zusammensetzung wiederum von einer Vielzahl von Einflussfaktoren bestimmt sein kann. Hier ist unter anderem an die Betriebstemperatur der Leitung, deren Nenndruck, die chemische Beständigkeit der Leitung und dergleichen zu denken. Vorzugsweise werden jedoch Dichtmittel verwendet, die bei einer Temperatur zwischen 130 °C und 450 °C für etwa 1 min bis 20 min oder auch bis zu 90 oder 120 min aushärten.

Die Dichtmittel unterliegen dann im normalen Betrieb, also wenn die Temperatur die maximale Betriebstemperatur nicht übersteigt, keinen wesentlichen Veränderungen physikalischer oder chemischer Art. Ähnliches wäre höchstens bei Temperaturen im Bereich der Aushärttemperaturen denkbar. Diese werden beim vorschriftsmäßigen Betrieb aber nie erreicht, so dass bei dem Verbindungselement sichergestellt ist, dass das Dichtmittel dauerhaft eine hohe Elastizität aufweist, die für die lang anhaltende Dichtwirkung entscheidend ist.

Vorzugsweise ist das Dichtmittel bei einer Temperatur ausgehärtet, die wenigstens 10 °C, vorzugsweise 20 °C, weiter vorzugsweise 50 °C über der maximalen im Betrieb zu erwartenden bzw. zulässigen Temperatur der Leitung liegt.

Ein Vorteil des Dichtmittels liegt weiterhin darin, dass es gleichzeitig in weiten Temperaturbereichen zum Einsatz kommen kann, ohne dass die physikalischen und chemischen Eigenschaften des Dichtmittels aufgrund thermischer Effekte verändert. Dieses gilt insbesondere für die erwähnte dauerhafte Elastizität. Vorteilhaft ist es darüber hinaus, wenn das Dichtmaterial auch eine hohe chemische Beständigkeit gegenüber einer Vielzahl von Medien aufweist und wenn das Dichtmaterial auf vielen, mit anderen Kunststoffen nicht zu beschichtenden Materialien gut haftet.

Eine weitere Maßnahme, um den Verbund zwischen dem Gewinde und dem Dichtmittel zu verbessern, besteht darin, dass die Oberfläche des Gewindes vorbehandelt ist. Zum einen kann die Vorbehandlung darin bestehen, dass die Oberfläche des Gewindes durch Partikelstrahlen oder durch Beizen aufgerauht ist. Zum anderen kann die Oberfläche des Gewindes mit einem Haftvermittler oder einem Primer vorbehandelt sein. In allen beschriebenen Beispielen wird durch die Vorbehandlung eine bessere Haftung des Dichtmittels am Material des Gewindes erreicht.

Als Verbindungselement kommen grundsätzlich alle aus dem Stand der Technik bekannten Verbindungselemente in Frage, die Teil einer Schraubverbindung sein können. Dabei spielt es grundsätzlich auch keine Rolle, welche Gewindeart bei dem Verbindungselement vorgesehen ist, oder ob das Gewinde eingängig oder mehrgängig ausgebildet ist. Folglich werden diese Unterschiede nicht weiter diskutiert, ohne dass dies einer Beschränkung gleichkäme.

Das Dichtmittel ermöglicht eine zuverlässige Abdichtung von Spitz-, Trapez-, Rund-, Flach- oder anderen gebräuchlichen Gewinden. Gleichfalls kann je nach Anwendungsfall ein zylindrisches oder ein konisches Gewinde verwendet werden. Bei konischen Gewinden kann die Dichtheit einer ansonsten metallischen Dichtung durch die Verwendung des Dichtmittels noch verbessert bzw. die erforderliche Kraft zum Anziehen der Schraubverbindung bei gleicher Abdichtung verringert werden, da sich das Dichtmittel weitaus leichter deformieren lässt als das Metall des Innen- bzw. des Außengewindes.

Die Entscheidung, welches Gewinde letztlich verwendet wird, kann im Wesentlichen ohne Rücksicht auf die Abdichtung auf die bereits bekannten Kriterien gestützt werden. Selbst Kunststoffgewinde können zum Einsatz kommen.

Das Abdichten der Schraubverbindung als solches erfolgt über das Verquetschen des Dichtmittels in den Gewindegängen der Schraubverbindung. Bei diesem Verquetschen baut das Dichtmittel Rückstellkräfte auf, die einem unbeabsichtigten Lösen der Schraubverbindung entgegenwirken.

Ferner kann das Verbindungselement bereits lange vor dessen Verwendung mit dem Dichtmittel versehen werden. Eine Beschädigung des Dichtmittels durch eine Lagerung über einen längeren Zeitraum oder durch mechanische Einwirkungen beim Transport oder beim Verschrauben wird aufgrund der Widerstandsfähigkeit des Dichtmittels sicher verhindert. Vorzugsweise erfolgt die Herstellung des Verbindungselements und das Anbringen des Dichtmittels in einem gemeinsamen Herstellungsprozess unmittelbar aufeinanderfolgend. Dann kann durch die Verwendung entsprechender Maschinentechnik und die Produktion höherer Stückzahlen der Aufwand für das Anbringen des Dichtmittels minimiert und eine Fehlbeschichtung vor Ort verhindert werden.

Der Anwender muss sich beim Herstellen einer Schraubverbindung dann nicht um die Abdichtung kümmern, sondern kann einfach bereits vorbeschichtete Verbindungselemente aus einem Vorrat entnehmen und diese ohne weiteren Zwischenschritt miteinander verschrauben. Dabei ist auch keine besondere Sorgfalt erforderlich. Es ist in der Regel sogar problemlos möglich, eine bereits hergestellte Verschraubung wieder zu lösen und erneut zu verschrauben. Die Abdichtung der Schraubverbindung wird dadurch im Gegensatz zu den aus dem Stand der Technik bekannten Gewindedichtungen nicht nachteilig berührt.

Darüber hinaus kann es vorteilhaft sein, wenn das beschichtete Gewinde mit einer Flüssigkeit benetzt wird, so dass beim Einschrauben geringere Reibungskräften überwunden werden müssen. Als Flüssigkeiten kommen Wasser sowie Fette oder Öle in Frage. Wird das Gewinde bei Trinkwasserleitungen eingesetzt, so ist es natürlich erforderlich, dass die Flüssigkeit Trinkwasser verträglich ist. In diesem Fall kommen daher neben Wasser insbesondere Lebensmittelsfette oder -öle in Frage.

Der Bereich des Gewindes bzw. des Gewindegangs, der das Dichtmittel trägt, wird hier durch die Zahl der Umläufe des Gewindegangs beschrieben. Mit anderen Worten ist ein vollständiger Umlauf die Länge des Gewindegangs die er benötigt um 360° um den Dorn oder Kern des Gewindes umzulaufen. Dabei entspricht die Entfernung zwischen Ausgangspunkt und Endpunkt eines vollständigen Umlaufs längs zum Gewinde der Steigung des Gewindes. Ist für ein gegebenes Verbindungselement das Gewinde bekannt, so ergibt sich für den Fachmann ohne weiteres aus der in Umläufen formulierten Angabe ohne weiteres, wo Dichtmittel vorhanden ist oder nicht.

Im Hinblick auf das Aufbringen des Dichtmittels auf das Gewinde ist es bevorzugt, wenn es sich bei dem Gewinde um ein Außengewinde handelt, wobei es selbstverständlich auch möglich ist, das Dichtmittel bei einem Innengewinde vorzusehen. Hierfür muss jedoch ein erhöhter Herstellungsaufwand in Kauf genommen werden. Die Wirkung des Dichtmittels ist letztlich in beiden Fällen identisch.

Bei einer weiter bevorzugten Ausführungsform ist vorgesehen, dass das Dichtmittel den Gewindegang im Wesentlichen vollständig ausfüllt. Dies bedeutet mit anderen Worten, dass der Gewindegang, der nach außen von den Enden der Gewindeflanken begrenzt wird, zu wenigstens 80%, vorzugsweise zu wenigstens 90% ausgefüllt ist. Alternativ ist es aber auch möglich, dass der Gewindegang überfüllt ist, also Dichtmaterial über die äußeren Enden der Gewindeflanke übersteht. Insbesondere ist etwa 10 % bis 20 % mehr Dichtmittel vorhanden, als der Gewindegang zu seiner vollständigen Füllung aufnehmen kann. Grundsätzlich ist es bevorzugt, umso mehr Dichtmittel vorzusehen, je größer der Gewindedurchmesser ist.

Die entsprechende Menge an Dichtmittel stellt dann unabhängig vom verwendeten Gewinde des Verbindungselements und des entsprechenden Gegengewindes eine zufriedenstellende Abdichtung sicher. Das Dichtmittel muss dann selbstverständlich eine hinreichende Elastizität aufweisen. Die elastische Verformung beim Verschrauben kann dennoch gegebenenfalls von einer plastischen Verformung überlagert sein. Zudem kann ein Ablösen des Dichtmittels durch die beim Verschrauben auftretenden Kräfte ausgeschlossen werden.

Grundsätzlich ist es aber auch denkbar, dass der Gewindegang nicht im Wesentlichen vollständig gefüllt ist. Dann ist der Gewindegang vorzugsweise gerade soweit gefüllt, dass die Dichtmittelmenge bzw. das Dichtmittelvolumen im Gewindegang nach dem Verschrauben mit einem Gegengewinde ausreicht, um den Zwischenraum zwischen dem Innen- und dem Außengewinde der so gebildeten Schraubverbindung im Bereich des Dichtmittelabschnitts auszufüllen. Dabei kann von einem Fachmann ohne weiteres das benötigte Dichtmittelvolumen bestimmt werden, wenn er Typ und Größe der beiden miteinander zu verschraubenden Gewinde festgelegt hat.

Gemäß einer weiteren Ausgestaltung der Erfindung kann das Dichtmittel im Gewindegang konturnah aufgetragen sein. Unter konturnaher Auftragung wird dabei eine im Wesentlichen gleichförmige Beschichtung der Oberfläche des Gewindes verstanden. Man kann auch von einem gleichmäßigen Überzug des Gewindes mit dem Material des Dichtmittels sprechen. Dabei kommt es nicht auf eine mehr oder weniger konstante Dicke der Beschichtung an, sondern darauf, dass sämtliche Gewindeteile beschichtet sind. Denn im Gegensatz zum Auffüllen des Gewindegangs, das an anderer Stelle dieser Beschreibung erläutert worden ist, kommt es beim konturnahen Auftragen der Beschichtung darauf an, dass auch die Gewindespitzen und nicht nur die Gewindeflanken und der Gewindegrund mit dem Dichtmittel versehen sind. Jedenfalls muss gewährleistet sein, dass beim Zusammenschrauben der Gewindeteile durch das Dichtmittel eine Abdichtung zwischen den Gewindeteilen mindestens über eine vollständige Umdrehung des Gewindes gewährleistet ist.

Damit das Verschrauben der Verbindungselemente nicht unnötig erschwert wird, ist bei einer ebenfalls bevorzugten Ausführungsform vorgesehen, dass das Dichtmittel über bis zu zehn oder auch mehr vollständige Umläufe des Gewindegangs im Gewindegang vorgesehen ist. Die optimale Anzahl an Umläufen ist hier selbstverständlich vom Einzelfall abhängig. In der Regel ist es jedoch ausreichend, wenn das Dichtmittel über zwei bis fünf vollständige Umläufe im Gewindegang vorgesehen ist.

Die Handhabung des Verbindungselements kann alternativ oder zusätzlich auch dadurch verbessert werden, dass der Gewindegang an einem Einschraubende mindestens über einen vollständigen Umlauf des Gewindegangs kein Dichtmittel aufweist. Dies erleichtert ein Eindrehen des Verbindungselements und verringert die Gefahr des Verkantens, während die Verbindungselemente einer Schraubverbindung miteinander in Eingriff gebracht werden. Eine noch größere Erleichterung beim Einschrauben wird erzielt, wenn die beiden ersten oder gar die drei ersten vollständigen Umläufe des Gewindegangs vom Einschraubende frei von Dichtmittel sind. Grundsätzlich kann natürlich vorgesehen sein, dass am Einschraubende ein dichtmittelfreier Bereich beliebiger Länge vorgesehen ist. Ab einer gewissen Länge dieses Bereichs wird das Einschrauben jedoch nicht mehr merklich erleichtert.

Um sicherzustellen, dass das Dichtmittel nicht aus der Schraubverbindung nach außen herausgedrückt wird, was unter anderem aus optischen Gründen unerwünscht sein kann, ist bei einer Ausgestaltung des Verbindungselements an dem dem Einschraubende entgegengesetzten Ende des Gewindes ein vollständiger Umlauf des Gewindegangs vorgesehen, der frei von Dichtmittel ist. Werden sehr hohe Anforderungen an das optische Erscheinungsbild der Schraubverbindung gestellt, kann es zweckmäßig sein, wenn das Dichtmittel über zwei oder gar drei vollständige Umläufe des Gewindegangs frei von Dichtmittel ist. Die Anzahl der dichtmittelfreien Umläufe des Gewindegangs kann grundsätzlich noch erhöht werden, jedoch kann das im Einzelfall zu einer insgesamt größeren Gewindelänge führen.

Eine weitere Ausgestaltung der vorliegenden Erfindung besteht darin, dass eine radial ausgestochene Nut im Gewinde vorgesehen ist und dass die Nut mit Dichtmittel versehen ist. Durch die radiale Nut wird gewährleistet, dass dem Dichtmittel ein größeres Volumen zur Verfügung steht, innerhalb dessen es sich verdrängen oder zusammenstauchen lassen kann. Zudem ermöglicht es die Nut, dass das in Gegengewinde zumindest über einen vollständigen Umfang in jedem Fall mit Dichtmittel umgeben ist und ein direktes Anliegen der beiden Gewindeteile ohne Dichtmittel zwischen den Anlageflächen vermieden wird. Dadurch wird die Zuverlässigkeit der Abdichtung zwischen den Gewinde teilen verbessert.

Alternativ oder zusätzlich kann bei einer weiteren bevorzugten Ausgestaltung eine oder mehrere axial ausgestochene Nuten im Gewinde vorgesehen sein, die mit Dichtmittel versehen sind. Die axialen Nuten durchtrennen die Gewindegänge, die ebenfalls mit Dichtmittel in einer der zuvor beschriebenen Weisen ausgefüllt sind. Auch hier dienen die Nuten als Dichtmittelreservoir.

Zuvor sind die Nuten als radialer oder axial ausgesprochenen Nuten beschrieben worden. Es ist jedoch im Rahmen der Erfindung ebenfalls möglich Nuten der vorzusehen, die unter einem Winkel zur radialen Ausrichtung und unter einem Winkel zur axialen Ausrichtung verlaufen. Derartige schräg verlaufende Nuten können in beliebiger Form angebracht werden und weisen dieselben Eigenschaften und Vorteile auf, wie sie zuvor für die radiale und/oder axiale Nuten beschrieben worden sind.

Das oben aufgezeigte technische Problem wird erfindungsgemäß auch durch ein Verbindungselement zum Herstellen einer fluiddichten Schraubverbindung einer Leitung gelöst, wobei das Verbindungselement ein Gewinde aufweist. Zur Lösung des Problems ist mindestens eine radial ausgestochene Nut im Gewinde vorgesehen, wobei die Nut mit Dichtmittel versehen ist.

Nach dieser ebenfalls zur Erfindung gehörenden Ausführungsform sind nicht ein oder mehrere Gewindegänge mit Dichtmittel versehen, sondern die radiale Nut, die letztlich die Gewindegänge in axialer Richtung durchtrennt, ist mit dem Dichtmittel versehen. Das Dichtmittel in der radial ausgestochenen Nut kann mit einem Dichtungsring verglichen werden, der jedoch nicht lose in der Nut angeordnet ist, sondern dauerhaft mit der Nut verbunden ist.

Das Dichtmittel enthält, wie oben bereits ausführlich erläutert worden ist, ein Material ausgewählt aus der folgenden Gruppe und/oder besteht aus mindestens einem dieser Materialien:
Silikone, Fluorpolymere, insbesondere Perfluoralkoxypolymere, Epoxidharze und Polyurethane. Das Dichtmittel kann ferner ein Elastomer, vorzugsweise ein thermoplastisches Elastomer enthalten und/oder daraus bestehen.

Neben der Möglichkeit, dass die radial ausgestochenen Nut alleine mit Dichtmittel versehen ist, kann auch hier vorgesehen sein, dass die radial ausgestochene Nut sowie umgebende Gewindegänge des Gewindes mit Dichtmittel versehen sind. Somit ergibt sich die bereits oben beschriebene Ausführungsform.

Weitere Eigenschaften und Vorteile dieser alternativen Ausführungsform des Verbindungselements ergeben sich aus der zuvor angegebenen Beschreibung der Merkmale der verschiedenen Ausführung Beispiele. Um Wiederholungen zu vermeiden, wird auf diese Beispiele Bezug genommen.

Bei dem erfindungsgemäßen Rohrstück und der erfindungsgemäßen Armatur ist vorgesehen, dass ein Anschlussende ein Verbindungselement der vorstehenden Art ist. Es können aber auch zwei oder mehr Verbindungselemente bei dem Rohrstück oder der Armatur vorgesehen sein. Im Falle einer aus Rohrstücken zusammengesetzten Rohrleitung sollte jedoch sichergestellt sein, dass jede Schraubverbindung der Rohrleitung ein Verbindungselement mit einem Dichtmittel ist, das bei einer Temperatur größer der maximalen Betriebstemperatur ausgehärtet worden ist.

Das oben aufgezeigte technische Problem wird erfindungsgemäß auch durch ein Verfahren zur Herstellung eines Verbindungselements gelöst, bei dem das Gewinde und/oder die radiale Nut des Verbindungselements zumindest teilweise mit einem Dichtmittel überzogen wird und bei dem das Dichtmittel anschließend zur Aushärtung erhitzt oder bestrahlt wird. Durch die Aushärtung des Dichtmittels wird ein enger Verbund mit dem Gewinde hergestellt, so dass das Dichtmittel beim Verschrauben mit einem weiteren Gewindeteil sich nicht von der Oberfläche des Gewindes ablöst und somit dauerhaft eine Dichtung zwischen den beiden Gewindeteilen ermöglicht.

Bei einer bevorzugten Ausgestaltung des Verfahrens ist vorgesehen, dass das Dichtmittel zur Aushärtung vorzugsweise auf eine Temperatur größer als die Betriebstemperatur der Leitung erhitzt wird. Damit lassen sich die Verbindungselemente in einfacher Weise und in großer Stückzahl herstellen.

Wird bspw. als Dichtmittel ein Silikon verwendet, dann können die Aushärtungstemperaturen im Bereich von 170°C liegen, wobei die Behandlungszeiten im Bereich von 2 bis 10 min, vorzugsweise 5 min liegen. Wird als Dichtmittel ein PFA verwendet, dann können die Aushärtungstemperaturen im Bereich von 280°C bis 320°C liegen, wobei die Behandlungszeiten im Bereich von 5 min bis 15 min, vorzugsweise von 10 min liegen. Die vorgenannten Zahlenwerte sind rein beispielhaft zu verstehen und beschränken nicht die Erfindung.

In weiter bevorzugter Weise kann das Gewinde oder zumindest ein Gewindeteil auch vorgewärmt werden. Dadurch ist die Oberfläche des Gewindeteils besser auf die Anwendung des Dichtmittels vorbereitet.

Ferner kann vorgesehen sein, dass Mittel eingesetzt werden, welche den Gewindebereich, auf den das Dichtmittel aufgebracht wird, auf einen vorherbestimmten Teilbereich des Gewindes beschränken. So können Umläufe des Gewindegangs am Einschraubende und/oder an dem diesem gegenüberliegenden Ende des Gewindes ohne weiteres frei gelassen und das Dichtmittel nur in einem mittleren Bereich vorgesehen werden.

Wie bereits oben beschrieben worden ist, gibt es für die beispielhaft einsetzbaren Dichtmittel aus Silikon oder PFA bevorzugte Behandlungstemperaturbereiche und Behandlungszeiten, mit denen diese im Rahmen des erfindungsgemäßen-Verfahrens verarbeitet werden können.

Im Folgenden wird die Erfindung anhand eines Ausführungsbeispiels mit Bezug auf die beigefügte Zeichnung näher erläutert. In der Zeichnung zeigen
- Fig. 1: ein Ausführungsbeispiel eines Verbindungselements in einer Schnittdarstellung,
- Fig. 2: der Ausschnitt II aus Fig. 1 in einer vergrößerten schematischen Darstellung.
- Fig. 3: das Ausführungsbeispiel des Verbindungselements aus Fig. 1 als Teil einer Schraubverbindung,
- Fig. 4: der Ausschnitt IV aus Fig. 3 mit einem Spitzgewinde in einer vergrößerten schematischen Darstellung,
- Fig. 5: ein Ausführungsbeispiel eines Verbindungselements mit einem konischen Gewinde, das konturnah mit Dichtmittel versehen ist,
- Fig. 6: ein Ausführungsbeispiel eines Verbindungselements mit einem konischen Gewinde, das mit einer radial ausgestochenen Nut versehen ist,
- Fig. 7: ein Ausführungsbeispiel eines Verbindungselements mit einem konischen Gewinde, das mit einer axial ausgestochenen Nut versehen ist, in einer perspektivischen Darstellung und
- Fig. 8: das in Fig. 7 dargestellte Ausführungsbeispiel im Querschnitt.

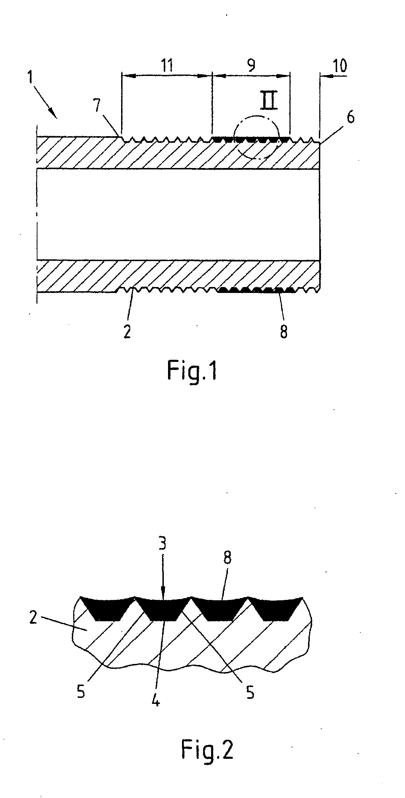

Die Fig. 1 zeigt ein Verbindungselement 1 mit einem zylindrischen Außengewinde. Das Gewinde 2 wird von einem Gewindegang 3 gebildet, welcher von einem Gewindegrund 4 und zwei sich zu beiden Seiten dem Gewindegrund 4 anschließende Gewindeflanken 5 gebildet wird. Der Gewindegang 3 erstreckt sich entlang des gesamten Gewindes 2 von dem Einschraubende 6 bis zum dem gegenüber angeordneten Ende 7 des Gewindes 2.

In einem Teilabschnitt des Gewindegangs 3 bzw. des Gewindes 2 ist ein Dichtmittel 8 vorgesehen. Dabei haftet das Dichtmittel 8 fest im Gewindegang 3 des Gewindes 2 und liegt im Wesentlichen vollflächig an dem Gewindegrund 4 und den Gewindeflanken 5 an. Der mit dem Dichtmittel 8 versehene Teilabschnitt, der Dichtmittelabschnitt 9, erstreckt sich bei dem in Fig. 1 dargestellten Ausführungsbeispiel über sieben vollständige Umläufe des Gewindegangs.

Auch wenn in den Fig. 1 bis 4 ein vollständig anliegendes Dichtmittel dargestellt ist, ist ein vollständiges Anliegen des Dichtmittels nicht zwingend erforderlich. In diesem Fall sind jedoch die Bindungskräfte zwischen dem Dichtmittel und dem Gewindegang besonders groß. Bei guten Fließeigenschaften des Dichtmittels im Moment des Aufbringens kann ein vollständiges Anliegen auch ohne weiteres erreicht werden. Ein lediglich bereichsweises bzw. abschnittsweises Anliegen des Dichtmittels ist aber grundsätzlich unschädlich, solange das Bindemittel als solches so fest im Gewindegang haftet, dass es zu keiner ungewollten Ablösung des Dichtmittels kommt.

Der Dichtmittelabschnitt 9 grenzt zudem weder an das Einschraubende 6 noch an das gegenüberliegende Ende 7 des Gewindes 2. Vielmehr ist zwischen dem Einschraubende 6 des Gewindes 2 und dem Dichtmittelabschnitt 9 ein Einschraubabschnitt 10 angeordnet, der sich über drei vollständige Umläufe des Gewindegangs erstreckt.

Auf der dem Einschraubende 6 abgewandten Seite des Dichtmittelabschnitts 9 erstreckt sich bis zum Ende 7 des Gewindes 2 ein Endabschnitt 11, der wie der Einschraubabschnitt 10 frei von Dichtmittel 8 ist. Bei dem Ausführungsbeispiel aus Fig. 1 erstreckt sich dieser Endabschnitt 10 über eine Länge von acht vollständigen Umläufen des Gewindegangs.

Der Dichtmittelabschnitt 9, der Einschraubabschnitt 10 und der Endabschnitt 11 können aber auch andere Dimensionen aufweisen. Wichtig ist jedoch, dass das Dichtmittel 8 wenigstens entlang eines vollständigen Umlaufs des Gewindegangs und höchstens über eine Anzahl an Umläufen vorgesehen ist, die es gerade noch ermöglichen, mit einem vorab festgelegten Kraftaufwand eine fluiddichte Schraubverbindung herzustellen. Zur Verringerung der Gewindelänge kann auf den Einschraubabschnitt 10 und den Endabschnitt 11 verzichtet werden. Zudem kann der Dichtmittelabschnitt 9 sehr kurz ausfallen, da die Rückstellkräfte des Dichtmittels ein unbeabsichtigtes Lösen der Schraubverbindung auch dann verhindern, wenn Außen- und Innengewinde nur über einen kurzen Bereich des Gewindegangs in Eingriff miteinander stehen.

Aus Fig. 2 geht hervor, dass bei dem Ausführungsbeispiel aus Fig. 1 der Gewindegang 3 im Bereich des Dichtmittelabschnitts 9 im Wesentlichen vollständig also bis etwa zur gesamten Höhe der Gewindeflanken 5 gefüllt ist. Ferner ist das Gewinde in Fig. 2 nur schematisch angedeutet, da grundsätzlich jeder bekannte Gewindetyp Verwendung finden kann.

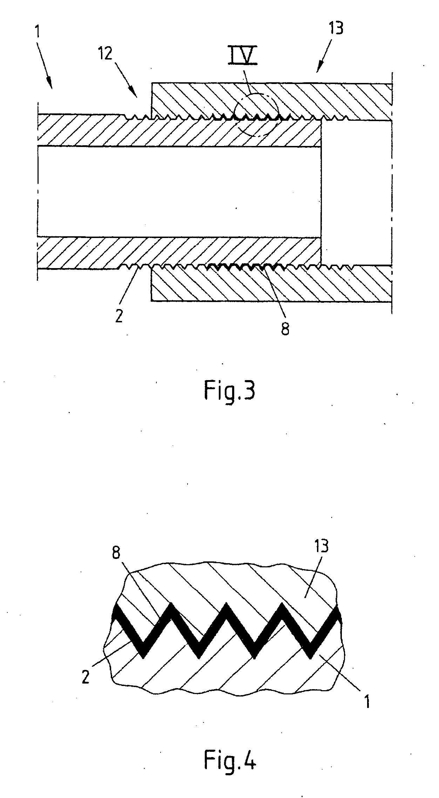

In Fig. 3 ist das Ausführungsbeispiel aus Fig. 1 dargestellt, und zwar als Teil einer Schraubverbindung 12 zusammen mit einer ein zylindrisches Innengewinde aufweisenden Muffe 13. Wie aus Fig. 3 hervorgeht, wird das Dichtmittel 8 trotz den beim Verschrauben auftretenden Scherkräften nicht als solches abgeschert und vor dem Verschraubungsbereich hergeschoben. Das Dichtmittel 8 bleibt vielmehr relativ zum Verbindungselement 1 im Wesentlichen an Ort und Stelle. Das Dichtmittel 8 wird lediglich zwischen dem Innengewinde und dem Außengewinde verquetscht. Ist der Zwischenraum zwischen dem Innengewinde und dem Außengewinde sehr klein, kann es sein, dass sich das Dichtmittel 8 in benachbarte Gewindegänge ausdehnt. Alternativ oder zusätzlich kann auch ein Teil des Dichtmittels 8 beim Verschrauben abgeschert werden und gegebenenfalls seinerseits im Endabschnitt 12 für eine Abdichtung der Schraubverbindung 12 sorgen. Aufgrund des Einschraubabschnitts 10 und des Endabschnitts 11 tritt das Dichtmittel 8 jedoch weder an dem Einschraubende 6 des Verbindungselements 1 noch an dem Einschraubende der Muffe 13 hervor.

Die Fig. 4 zeigt in vergrößerter Ansicht, wie das Dichtmittel 8 den Zwischenraum zwischen dem Außengewinde des Verbindungselements 1 und dem Innengewinde der Muffe 13 durch Verquetschen fluiddicht ausfüllt. Bei der dargestellten Ausführungsform ist ein Spitzengewinde vorgesehen, das einen linienförmigen Gewindegrund aufweist. Der Gewindegang des Gewindes kann also selbstverständlich auch im Wesentlichen allein durch die Gewindeflanken gebildet bzw. begrenzt werden.

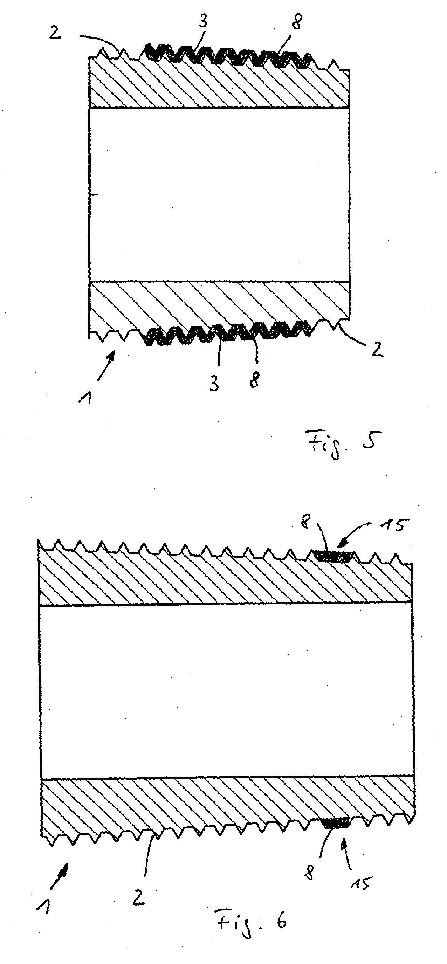

Fig. 5 zeigt ein Verbindungselement 1 mit einem konischen Gewinde 2. Im Gegensatz zu dem zuvor dargestellten Ausführungsbeispielen ist vorliegend das Dichtmittel 8 im Gewindegang 3 konturnah aufgetragen. Unter einer konturnahen Auftragung wird dabei verstanden, dass das Dichtmittel 8 in einer im wesentlichen gleichmäßigen Dicke als Schicht auf das Gewinde 2 aufgetragen ist und es nicht darauf ankommt, welchen Füllungsgrad die Gewindegänge 3 aufweisen. Beim Verschrauben mit einem Gegengewinde wird der Dichtmittel 8 in ähnlicher Weise, wie zuvor beschriebenen, komprimiert und führt zu einer dauerhaften Abdichtung der beiden verschraubten Gewindeteile.

Fig. 6 zeigt ein weiteres Ausführungsbeispiel eines erfindungsgemäßen Verbindungselements 1, das ebenfalls mit einem konischen Gewinde 2 versehen. Vorliegend ist eine radial ausgestochene Nut 15 vorgesehen, die das Außengewinde 2 in axialer Richtung durchtrennt. Wie in Fig. 6 zu erkennen ist, ist nur die Nut 15 mit Dichtmittel 8 versehen. Dadurch ergibt sich der Effekt eines Dichtungsringes, der fest mit den Gewinde verbunden ist und in den sich das Gegengewinde einschneidet und somit die Dichtwirkung hervorruft.

In Fig. 6 ist ein Gewinde mit einer Nut 15 dargestellt. Daneben ist es selbstverständlich möglich, mehrere radial ausgestochene Nuten 15 entlang des Gewindes 2 vorzusehen.

Wie zuvor beschrieben worden ist, ist bei dem in Fig. 6 dargestellten Ausführungsbeispiel nur die Nut 15 mit Dichtmittel versehen. Bei einer weiteren Ausgestaltung, die in den Figuren nicht dargestellt ist, können zusätzlich auch auf zumindest einer der beiden Seiten der Nut angeordneten Gewindegänge mit einem Dichtmittel versehen sein. Dadurch werden die beiden Varianten miteinander kombiniert, wobei die radiale Nut 15 als Dichtmittelreservoir dient.

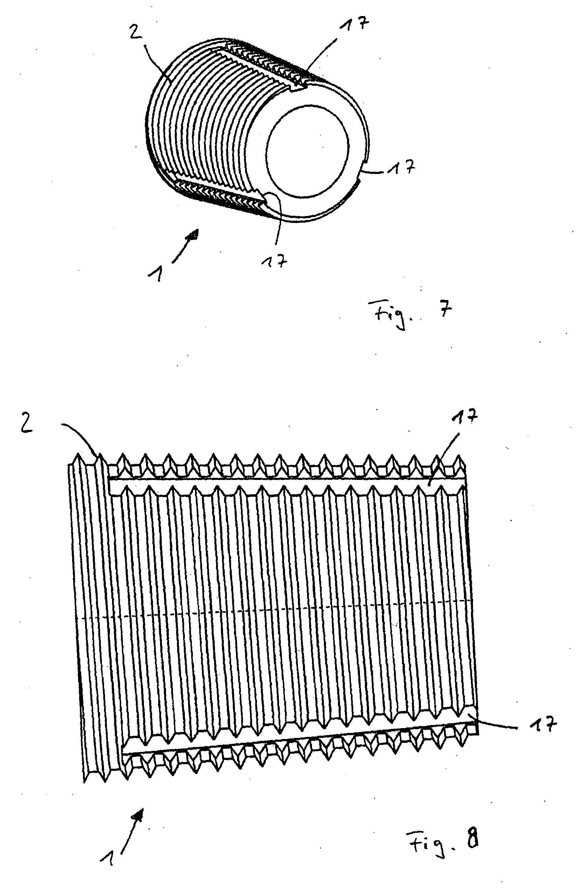

Die Fig. 7 und 8 zeigen ein weiteres Ausführungsbeispiel eines erfindungsgemäßen Verbindungselementes 1 mit einem konisch Innengewinde 2. Im Gegensatz durch dem zuvor anhand der Fig. 6 dargestellten Ausführungsbeispiel weist das Verbindungselement 1 drei axial ausgestochene Nuten 17 im Gewinde 2 auf. Die Nuten 17 sind in den Fig. 7 und 8 zur Verdeutlichung der Geometrie ohne eine Beschichtung dargestellt. Gemäß der vorliegenden Erfindung ist jedoch vorgesehen, dass die Nuten 17 zumindest teilweise mit Dichtmittel 8 versehen sind und somit ebenfalls als Dichtmittelreservoir dienen. Für eine vollständige Abdichtung zwischen zwei Gewindeteilen ist es jedoch erforderlich, dass zumindest ein vollständiger Gewindegang mit Dichtmittel versehen ist, wie es oben anhand der Fig. 1 bis 4 erläutert worden ist.

## Patentansprüche

1. Verbindungselement zum Herstellen einer fluiddichten Schraubverbindung (12) einer Leitung,
- mit einem Gewinde (2),
- mit einem von einem Gewindegrund (4) und benachbarten Gewindeflanken (5) begrenzten Gewindegang (3),
- mit einem wenigstens über einen vollständigen Umlauf des Gewindegangs (3) im Gewindegang (3) angeordneten Dichtmittel (8),
- wobei zwischen dem Dichtmittel (8) und dem Gewindegang (3) eine Haftverbindung ausgebildet ist,
- wobei das Dichtmittel mindestens ein Material ausgewählt aus der folgenden Gruppe enthält: Silikone, Fluorpolymere, insbesondere Perfluoralkoxypolymere, Epoxidharze und/oder Polyurethane,
- wobei das Dichtmittel (8) einen Füllstoff aufweist, **dadurch gekennzeichnet,**
- **dass** der Füllstoff Fasern aufweist.

2. Verbindungselement nach Anspruch 1,
**dadurch gekennzeichnet,**
**dass** das Dichtmittel (8) eine Mischung von mindestens zwei der in Anspruch 1 genannten Materialien enthält.

3. Verbindungselement nach Anspruch 1 oder 2,
**dadurch gekennzeichnet,**
**dass** die Fasern Wolle, Cellulose, Polyamid, Carbon, Glas und/oder Polyimid enthalten.

4. Verbindungselement nach Anspruch 3,
**dadurch gekennzeichnet,**
**dass** die Fasern geschlichtete Naturfasern, silanisiertes Pulver oder geprimerten Sand enthalten.

5. Verbindungselement nach einem der Ansprüche 1 bis 4,
**dadurch gekennzeichnet,**
**dass** der Füllstoff Filzteile, Pulver oder Flocken aufweist.

6. Verbindungselement nach einem der Ansprüche 1 bis 5,
**dadurch gekennzeichnet,**
**dass** der Füllstoff Mikropartikel aufweist.

7. Verbindungselement nach einem der Ansprüche 1 bis 6,
**dadurch gekennzeichnet,**
**dass** der Füllstoff Mikrokapseln aufweist.

8. verbindungselement nach Anspruch 7,
**dadurch gekennzeichnet,**
**dass** die Mikrokapseln einen Klebstoff, insbesondere einen Reaktivklebstoff enthalten.

9. verbindungselement nach Anspruch 7,
**dadurch gekennzeichnet,**
**dass** die Mikrokapseln eine Komponente zum Aufschäumen aufweisen.

10. Verbindungselement nach einem der Ansprüche 1 bis 9,
**dadurch gekennzeichnet,**
**dass** das Dichtmittel (8) in aufgeschäumter Form auf dem Gewinde vorliegt.

11. Verbindungselement nach einem der Ansprüche 1 bis 10,
**dadurch gekennzeichnet,**
**dass** das Dichtmittel (8) ein Gleitmittel aufweist.

12. Verbindungselement nach Anspruch 11,
**dadurch gekennzeichnet,**
**dass** das Gleitmittel plättchenförmige Mikropartikel, insbesondere Polyolefinteilchen oder Talkumteilchen aufweist.

13. Verbindungselement nach einem der Ansprüche 1 bis 12,
**dadurch gekennzeichnet,**
**dass** das Dichtmittel (8) Spanbrecher aufweist.

14. Verbindungselement nach Anspruch 13,
**dadurch gekennzeichnet,**
**dass** der Spanbrecher feste Mikropartikel mit einer geringen Adhäsion zum Material des Dichtmittels (8) aufweist, insbesondere enthaltend Polytetrafluorethylen (PTFE), Polyolefine und Schichtsilikate.

15. Verbindungselement nach einem der Ansprüche 1 bis 14,
**dadurch gekennzeichnet,**
**dass** das Dichtmittel (8) mindestens zwei Schichten aufweist, die sich in mindestens einer Eigenschaft unterscheiden.

16. Verbindungselement nach Anspruch 15,
**dadurch gekennzeichnet,**
**dass** die mindestens zwei Schichten unterschiedlich hart sind.

17. Verbindungselement nach Anspruch 16,
**dadurch gekennzeichnet,**
**dass** die dem Gewinde (2) nahe Schicht härter als die vom Gewinde abgewandte Schicht ist.

18. Verbindungselement nach Anspruch 16,
**dadurch gekennzeichnet,**
**dass** die dem Gewinde (2) nahe Schicht weicher als die vom Gewinde abgewandte Schicht ist.

19. Verbindungselement nach Anspruch 15,
**dadurch gekennzeichnet,**
**dass** die dem Gewinde (2) nahe Schicht Füllstoffe zur Einstellung der Härte aufweist und dass die vom Gewinde abgewandte Schicht Füllstoffe in Form von Spanbrechern und/oder Gleitmitteln aufweist.

20. Verbindungselement nach einem der Ansprüche 15 bis 19,
**dadurch gekennzeichnet,**
**dass** die mindestens zwei Schichten gradientenförmige Übergänge aufweisen.

21. Verbindungselement nach einem der Ansprüche 1 bis 20,
**dadurch gekennzeichnet,**
**dass** das Dichtmittel (8) durch Temperaturerhöhung oder durch Bestrahlung, insbesondere UV-Bestrahlung ausgehärtet wird.

22. Verbindungselement nach Anspruch 21,
**dadurch gekennzeichnet,**
**dass** das Dichtmittel (8) einen bei einer Temperatur größer als die Betriebstemperatur der Leitung aushärtbaren Kunststoff aufweist.

23. Verbindungselement nach einem der Ansprüche 1 bis 22,
**dadurch gekennzeichnet,**
**dass** die Oberfläche des Gewindes (2) zur Verbesserung des Verbundes zum Dichtmittel vorbehandelt ist.

24. Verbindungselement nach Anspruch 23,
**dadurch gekennzeichnet,**
**dass** die Oberfläche des Gewindes (2) durch Partikelstrahlen oder durch Beizen aufgerauht ist.

25. Verbindungselement nach Anspruch 23,
**dadurch gekennzeichnet,**
**dass** die Oberfläche des Gewindes (2) mit einem Haftvermittler oder einem Primer vorbehandelt ist.

26. Verbindungselement nach einem der Ansprüche 1 bis 25,
**dadurch gekennzeichnet,**
**dass** das Gewinde (2) ein Außengewinde ist.

27. Verbindungselement nach einem der Ansprüche 1 bis 26,
**dadurch gekennzeichnet,**
**dass** das Dichtmittel (8) den Gewindegang (3) im Wesentlichen vollständig ausfüllt oder dass der Gewindegang (3) überfüllt ist.

28. Verbindungselement nach einem der Ansprüche 1 bis 26,
**dadurch gekennzeichnet,**
**dass** das Dichtmittel (8) im Gewindegang konturnah aufgetragen ist.

29. Verbindungselement nach einem der Ansprüche 1 bis 28,
**dadurch gekennzeichnet,**
**dass** das Dichtmittel (8) über zwei bis zehn vollständige Umläufe des Gewindegangs (3) im Gewindegang (3) vorgesehen ist.

30. Verbindungselement nach einem der Ansprüche 1 bis 28,
**dadurch gekennzeichnet,**
**dass** das Dichtmittel (8) über zwei bis fünf vollständige Umläufe des Gewindegangs (3) im Gewindegang (3) vorgesehen ist.

31. Verbindungselement nach einem der Ansprüche 1 bis 30,
**dadurch gekennzeichnet,**
**dass** der Gewindegang (3) an einem Einschraubende (6) des Gewindes (2) über wenigstens einen vollständigen Umlauf des Gewindegangs, vorzugsweise zwei oder drei vollständige Umläufe des Gewindegangs frei von Dichtmittel (8) ist.

32. Verbindungselement nach einem der Ansprüche 1 bis 31,
**dadurch gekennzeichnet,**
**dass** der Gewindegang (3) an dem dem Einschraubende entgegengesetzten Ende (7) des Gewindes (2) über wenigstens einen vollständigen Umlauf des Gewindegangs, vorzugsweise zwei oder drei vollständige Umläufe des Gewindegangs frei von Dichtmittel (8) ist.

33. Verbindungselement nach einem der Ansprüche 1 bis 32,
**dadurch gekennzeichnet,**
**dass** mindestens eine radial ausgestochene Nut (15) im Gewinde (2) vorgesehen ist und dass die mindestens eine Nut (15) mit Dichtmittel versehen ist.

34. verbindungselement nach einem der Ansprüche 1 bis 33,
**dadurch gekennzeichnet,**
**dass** eine oder mehrere axial ausgestochene Nuten (17) im Gewinde (2) vorgesehen sind und dass die Nuten (17) mit Dichtmittel versehen sind.

35. Verbindungselement zum Herstellen einer fluiddichten Schraubverbindung (12) einer Leitung,
- mit einem Gewinde (2),
- wobei eine radial ausgestochene Nut (15) im Gewinde (2) vorgesehen ist und die Nut (15) mit Dichtmittel verstehen ist,
- wobei das Dichtmittel (8) mindestens ein Material ausgewählt aus der folgenden Gruppe enthält: Silikone, Fluorpolymere, insbesondere Perfluoralkoxypolymere, Epoxidharze und/oder Polyurethane,
- wobei das Dichtmittel (8) einen Füllstoff aufweist, **dadurch gekennzeichnet,**
- **dass** der Füllstoff Fasern aufweist.

36. Verbindungselement nach Anspruch 35,
**dadurch gekennzeichnet,**
**dass** die radial ausgestochene Nut (15) sowie umgebende Gewindegänge (3) des Gewindes (2) zumindest teilweise mit Dichtmittel (8) versehen sind.

37. Verbindungselement nach Anspruch 35 oder 36, **gekennzeichnet durch** eines der in den Ansprüchen 2 bis 34 angegebenen Merkmalen.

38. Rohrstück für eine fluiddichte Rohrleitung,
- mit wenigstens zwei Anschlussenden,
- wobei ein Anschlussende ein Verbindungselement nach einem der Ansprüche 1 bis 37 aufweist.

39. Armatur für einen fluiddichten Anschluss,
- mit wenigstens einem Anschlussende,
- wobei das weinigstens eine Anschlussende ein Verbindungselement nach einem der Ansprüche 1, bis 37 aufweist.

40. Verfahren zur Herstellung eines Verbindungselements nach einem der Ansprüche 1 bis 37,
- bei dem das Gewinde und/oder die radiale Nut und/oder die axiale Nut des Verbindungselements zumindest teilweise mit einem Dichtmittel überzogen wird und
- bei dem das Dichtmittel anschließend zur Aushärtung erhitzt oder bestrahlt wird.

41. Verfahren nach Anspruch 40,
bei dem das Dichtmittel zur Aushärtung auf eine Temperatur größer als die Betriebstemperatur einer Leitung zur Aufnahme des Verbindungselements erhitzt wird.

42. verfahren nach Anspruch 41,
bei dem als Dichtmittel ein Silikon verwendet wird, das bei einer Temperatur im Bereich von 170°C über einen Zeitraum von 2 bis 10 min, vorzugsweise von 5 min behandelt wird.

43. Verfahren nach Anspruch 41,
bei dem als Dichtmittel ein Perfluoroalkoxy (PFA) verwendet wird, das bei einer Temperatur im Bereich von 280°C bis 320°C über einen Zeitraum von 5 bis 15 min, vorzugsweise von 10 min behandelt wird.

## Claims

1. A connection element for producing a fluid-tight screw connection (12) of a conduit
- with a screw thread (2),
- with a pitch (3) defined by a base (4) of the screw thread and adjacent flanks (5) of the screw thread,
- with a sealant (8) disposed in the pitch (3) at least over a full revolution of the pitch (3),
- wherein an adhesion joint is formed between the sealant (8) and the pitch (3),
- wherein the sealant contains at least one material selected from the following group: silicons, fluorocarbon polymers, especially perfluoroalkoxy polymers, epoxy resins and/or polyurethanes,
- wherein the sealant (8) comprises a filler **characterised in that**
- the filler comprises fibres.

2. The connection element according to claim 1,
**characterised in that**
the sealant (8) contains a mixture of at least two of the materials mentioned in claim 1.

3. The connection element according to claim 1 or 2,
**characterised in that**
the fibres contain wool, cellulose, polyamide, carbon, glass and/or polyimide.

4. The connection element according to claim 3,
**characterised in that**
the fibres contain sized natural fibres, silanised powder or primed sand.

5. The connection element according to one of the claims 1 to 4,
**characterised in that**
the filler comprises felt pieces, powder or flocks.

6. The connection element according to one of the claims 1 to 5,
**characterised in that**
the filler comprises micro-particles.

7. The connection element according to one of the claims 1 to 6,
**characterised in that**
the filler comprises microcapsules.

8. The connection element according to claim 7,
**characterised in that**
the microcapsules contain an adhesive, especially a reactive adhesive.

9. The connection element according to claim 7,
**characterised in that**
the microcapsules have a foaming component.

10. The connection element according to one of the claims 1 to 9,
**characterised in that**
the sealant (8) is present on the screw thread in foamed form.

11. The connection element according to one of the claims 1 to 10,
**characterised in that**
the sealant (8) comprises a lubricant.

12. The connection element according to claim 11,
**characterised in that**
the lubricant comprises disc-shaped micro-particles, especially polyolefin particles or talcum particles.

13. The connection element according to one of the claims 1 to 12,
**characterised in that**
the sealant (8) comprises chip breakers.

14. The connection element according to claim 13,
**characterised in that**
the chip breaker exhibits solid micro-particles with low adhesion to the sealant (8) material, especially containing polytetrafluoroethylene (PTFE), polyolefins and layer silicates.

15. The connection element according to one of the claims 1 to 14,
**characterised in that**
the sealant (8) comprises at least two layers, which differ in at least one property.

16. The connection element according to claim 15,
**characterised in that**
the at least two layers have different hardnesses.

17. The connection element according to claim 16,
**characterised in that**
the layer next to the screw thread (2) is harder than the layer facing away from the screw thread.

18. The connection element according to claim 16,
**characterised in that**
the layer next to the screw thread (2) is softer than the layer facing away from the screw thread.

19. The connection element according to claim 15,
**characterised in that**
the layer next to the screw thread (2) has fillers to adjust the hardness and that the layer facing away from the screw thread has fillers in the form of chip breakers and/or lubricants.

20. The connection element according to one of the claims 15 to 19,
**characterised in that**
the at least two layers have gradient-shaped transitions.

21. The connection element according to one of the claims 1 to 20,
**characterised in that**
the sealant (8) is hardened by an increase in temperature or by radiation, especially UV radiation.

22. The connection element according claim 21,
**characterised in that**
the sealant (8) comprises plastic that can harden at a temperature higher than the conduit's operating temperature.

23. The connection element according to one of the claims 1 to 22,
**characterised in that**
the surface of the screw thread (2) is pretreated to improve the bond to the sealant.

24. The connection element according to claim 23,
**characterised in that**
the surface of the screw thread (2) is roughened by particle blasting or by etching.

25. The connection element according to claim 23,
**characterised in that**
the surface of the screw thread (2) is pretreated with an adhesive agent or a primer.

26. The connection element according to one of the claims 1 to 25,
**characterised in that**
the screw thread (2) is a male screw thread.

27. The connection element according to one of the claims 1 to 26,
**characterised in that**
the sealant (8) basically completely fills the pitch (3) of the screw thread or that the pitch (3) of the screw thread is overfilled.

28. The connection element according to one of the claims 1 to 26,
**characterised in that**
the sealant (8) is applied within the pitch in a contour-close way.

29. The connection element according to one of the claims 1 to 28,
**characterised in that**
the sealant (8) is provided within the pitch (3) over two to ten complete revolutions of the pitch (3).

30. The connection element according to one of the claims 1 to 28,
**characterised in that**
the sealant (8) is provided within the pitch (3) over two to five complete revolutions of the pitch (3).

31. The connection element according to one of the claims 1 to 30,
**characterised in that**
the pitch (3) at one threaded end (6) of the screw thread (2) is free from sealant (8) over at least one complete revolution of the pitch, preferably two or three complete revolutions of the pitch.

32. The connection element according to one of the claims 1 to 31,
**characterised in that**
the pitch (3) at the opposite end to the threaded end (7) of the screw thread (2) is free from sealant (8) over at least one complete revolution of the pitch, preferably two or three complete revolutions of the pitch.

33. The connection element according to one of the claims 1 to 32,
**characterised in that**
at least one radially cut groove (15) is provided in the screw thread (2) and that the at least one groove (15) is provided with sealant.

34. The connection element according to one of the claims 1 to 33,
**characterised in that**
one or several axially cut grooves (17) are provided in the pitch (2) and that the grooves (17) are provided with sealant.

35. A connection element for producing a fluid-tight screw connection (12) of a conduit
- with a screw thread (2),
- wherein a radially cut groove (15) is provided in the screw thread (2) and the groove (15) is provided with sealant,
- wherein the sealant (8) contains at least one material selected from the following group: silicons, fluorocarbon polymers, especially perfluoroalkoxy polymers, epoxy resins and/or polyurethanes,
- wherein the sealant (8) comprises a filler **characterised in that**
- the filler comprises fibres.

36. The connection element according to claim 35,
**characterised in that**
the radially cut groove (15) and the surrounding pitches (3) of the screw thread (2) are provided at least partly with sealant (8).

37. The connection element according to claim 35 or 36, **characterised by** one of the features specified in claims 2 to 34.

38. A tubular piece for a fluid-tight pipeline,
- with at least two connection ends,
- wherein one connection end exhibits a connection element according to one of the claims 1 to 37.

39. A fitting for a fluid-tight connection,
- with at least one connection end,
- wherein the at least one connection end exhibits a connection element according to one of the claims 1 to 37.

40. A method of producing a connection element according to one of the claims 1 to 37,
- in which the screw thread and/or the radial groove and/or the axial groove of the connection element is at least partly coated with a sealant and
- in which the sealant is subsequently heated or irradiated to harden it.

41. The method according to claim 40,
in which the sealant is heated for curing to a temperature greater than the operating temperature of a conduit for accommodating the connection element.

42. The method according to claim 41,
in which a silicon, which is treated at a temperature in the region of 170 °C over a period of 2 to 10 min., preferably of 5 min. is used as sealant.

43. The method according to claim 41,
in which a perfluoralkoxy (PFA), which is treated at a temperature in the range of 280 °C to 320 °C for a period of 5 to 15 min., preferably of 10 min., is used as sealant.

## Revendications

1. Elément d'assemblage pour la réalisation d'un raccordement par vissage (12), étanche aux fluides, pour une tuyauterie,
- avec un filet (2),
- avec un pas de vis (3), limité par un fond de filet (4) et des flancs de filet (5) adjacents,
- avec un moyen d'étanchéité (8), disposé, dans le pas de vis (3), au moins, sur un tour complet du pas de vis (3),
- une liaison par adhésion étant formée entre le moyen d'étanchéité (8) et le pas de vis (3),
- le moyen d'étanchéité comprenant au moins une matière sélectionnée dans les groupes suivants :
Silicones, polymères fluorés, en particulier coxypolymères perfluorés, résine époxy et / ou polyuréthanes,
- le moyen d'étanchéité (8) présentant une matière de charge,
**caractérisé en ce que** la matière de charge présente des fibres.

2. Elément d'assemblage selon la revendication 1, **caractérisé en ce que** le moyen d'étanchéité (8) contient un mélange d'au moins deux des matières nommées dans la revendication 1.

3. Elément d'assemblage selon revendication 1 ou 2, **caractérisé en ce que** les fibres contiennent de la laine, de la cellulose, du polyamide, du carbone, du verre et / ou du polyamide.

4. Elément d'assemblage selon la revendication 3, **caractérisé en ce que** les fibres contiennent des fibres naturelles, parées, de la poudre au silane ou du sable primé.

5. Elément d'assemblage selon l'une des revendications 1 à 4, **caractérisé en ce que** la matière de charge présente des particules de feutre, de la poudre ou des flocons.

6. Elément d'assemblage selon l'une des revendications 1 à 5, **caractérisé en ce que** la matière de charge présente des microparticules.

7. Elément d'assemblage selon l'une des revendications 1 à 6, **caractérisé en ce que** la matière de charge présente des microcapsules.

8. Elément d'assemblage selon la revendication 7, **caractérisé en ce que** les microcapsules contiennent une colle, en particulier une colle réactive.

9. Elément d'assemblage selon la revendication 7, **caractérisé en ce que** les microcapsules contiennent un composant à mousser.

10. Elément d'assemblage selon l'une des revendications 1 à 9, **caractérisé en ce que** le moyen d'étanchéité (8) est prévu sur le filet sous une forme moussée.

11. Elément d'assemblage selon l'une des revendications 1 à 10, **caractérisé en ce que** le moyen d'étanchéité (8) présente un lubrifiant.

12. Elément d'assemblage selon la revendication 11, **caractérisé en ce que** le lubrifiant présente des microparticules en forme de plaquettes, en particulier des particules de polyoléfine ou des particules de talc.

13. Elément d'assemblage selon l'une des revendications 1 à 12, **caractérisé en ce que** le moyen d'étanchéité (8) présente des brise-copeaux.

14. Elément d'assemblage selon la revendication 13, **caractérisé en ce que** le brise-copeaux présente des microparticules solides, à faible propriété d'adhésion au matériau du moyen d'étanchéité (8), qui contiennent en particulier du polytétrafluoréthylène (PTFE) et du phyllosilicate.

15. Elément d'assemblage selon l'une des revendications 1 à 14, **caractérisé en ce que** le moyen d'étanchéité (8) présente au moins deux couches, qui diffèrent l'une de l'autre par au moins une propriété.

16. Elément d'assemblage selon la revendication 15, **caractérisé en ce que** les deux couches au moins prévues sont de dureté différente.

17. Elément d'assemblage selon la revendication 16, **caractérisé en ce que** la couche située à proximité du filet (2) est plus dure que la couche opposée au filet.

18. Elément d'assemblage selon la revendication 16, **caractérisé en ce que** la couche située à proximité du filet (2) est plus tendre que la couche opposée au filet.

19. Elément d'assemblage selon la revendication 15, **caractérisé en ce que** la couche située à proximité du filet (2) présente des matières de charge pour l'ajustage de la dureté et que la couche opposée au filet présente des matières de charge sous la forme de brise-copeaux et / ou de lubrifiants.

20. Elément d'assemblage selon l'une des revendications 15 à 19, **caractérisé en ce que** les deux couches au moins prévues présentent des zones de transition en forme de gradients.

21. Elément d'assemblage selon l'une des revendications 1 à 20, **caractérisé en ce que** le moyen d'étanchéité (8) est durci par élévation de température ou par irradiation, en particulier par irradiation UV.

22. Elément d'assemblage selon la revendication 21, **caractérisé en ce que** le moyen d'étanchéité (8) présente une matière plastique, qui peut être durcie à une température plus élevée que la température de service d'une tuyauterie.

23. Elément d'assemblage selon l'une des revendications 1 à 22, **caractérisé en ce que** la surface du filet (2) est soumise à un traitement préalable pour améliorer l'adhérence au moyen d'étanchéité.

24. Elément d'assemblage selon la revendication 23, **caractérisé en ce que** la surface du filet (2) est rendue rugueuse par jet de particules ou par décapage.

25. Elément d'assemblage selon la revendication 23, **caractérisé en ce que** la surface du filet (2) est prétraitée avec un agent adhésif ou une couche de fond.

26. Elément d'assemblage selon l'une des revendications 1 à 25, **caractérisé en ce que** le filet (2) est un filet extérieur.

27. Elément d'assemblage selon l'une des revendications 1 à 26, **caractérisé en ce que** le moyen d'étanchéité (8) remplit sensiblement complètement le pas de vis (3) ou que le pas de vis (3) est surrempli.

28. Elément d'assemblage selon l'une des revendications 1 à 26, **caractérisé en ce que** le moyen d'étanchéité (8) est appliqué dans le pas de vis (3), de manière adjacente au contour.

29. Elément d'assemblage selon l'une des revendication 1 à 28, **caractérisé en ce que** le moyen d'étanchéité (8) est prévu dans la pas de vis (3) sur deux à dix tours complets du pas de vis (3).

30. Elément d'assemblage selon l'une des revendications 1 à 28, **caractérisé en ce que** le moyen d'étanchéité (8) est prévu dans la pas de vis (3) sur deux à cinq tours complets du pas de vis (3).

31. Elément d'assemblage selon l'une des revendications 1 à 30, **caractérisé en ce que** le pas de vis (3) est exempt de moyen d'étanchéité (8) à une extrémité de vissage (6) du filet (2), sur au moins un tour complet du pas de vis, de préférence sur deux ou trois tours complets du pas de vis.

32. Elément d'assemblage selon l'une des revendications 1 à 31, **caractérisé en ce que** le pas de vis (3) est exempt de moyen d'étanchéité (8) à l'extrémité (7) opposée à l'extrémité de vissage du filet (2), sur au moins un tour complet du pas de vis, de préférence sur deux tours complets du pas de vis.

33. Elément d'assemblage selon l'une des revendications 1 à 32, **caractérisé en ce que**, dans le filet (2), est prévue au moins une rainure (15), radialement découpée, et **en ce que** la rainure (15) au moins prévue est pourvue de moyen d'étanchéité.

34. Elément d'assemblage selon l'une des revendications 1 à 33, **caractérisé en ce que** sont prévues, dans le filet (2), une ou plusieurs rainures (17) axialement découpées, et **en ce que** les rainures (17) sont pourvues de moyen d'étanchéité.

35. Elément d'assemblage pour la réalisation d'un raccord vissé (12), étanche aux fluides, pour une tuyauterie,
- avec un filet (2),
- une rainure (15) découpée radialement étant prévue dans le filet (2) et la rainure (15) étant pourvue de moyen d'étanchéité,
- le moyen d'étanchéité (8) contenant au moins une matière sélectionnée dans les groupes suivants :
Silicones, polymères fluorés, en particulier coxypolymères perfluorés, résine époxy et / ou polyuréthanes,
- le moyen d'étanchéité (8) présentant une matière de charge,
**caractérisé en ce que** la matière de charge présente des fibres.

36. Elément d'assemblage selon la revendication 35, **caractérisé en ce que** la rainure (15) découpée radialement, ainsi que des pas de vis (3) du filet (2) environnants sont pourvus, au moins partiellement, de moyen d'étanchéité (8).

37. Elément d'assemblage selon revendication 35 ou 36, **caractérisé par** l'une des caractéristiques indiquées dans les revendications 2 à 34.

38. Pièce tubulaire pour une tuyauterie étanche aux fluides,
- avec au moins deux extrémités de raccordement,
- une extrémité de raccordement présentant un élément d'assemblage selon l'une des revendications 1 à 37.

39. Armature pour un raccord étanche aux fluides,
- avec au moins une extrémité de raccordement,
- l'extrémité de raccordement au moins prévue présentant un élément d'assemblage selon l'une des revendications 1 à 37.

40. Procédé de fabrication d'un élément d'assemblage selon l'une des revendications 1 à 37,
- dans lequel le filet et / ou la rainure radiale et / ou la rainure axiale de l'élément d'assemblage sont revêtus, au moins partiellement, d'un moyen d'étanchéité, et
- dans lequel le moyen d'étanchéité est ensuite chauffé ou irradié aux fins de durcissement.

41. Procédé selon la revendication 40, dans lequel, aux fins de durcissement, le moyen d'étanchéité est chauffé à une température plus élevée que la température de service d'une tuyauterie devant être équipée d'un tel élément d'assemblage.

42. Procédé selon la revendication 41, dans lequel, on utilise en tant que moyen d'étanchéité de la silicone, qui est traitée à une température de l'ordre de 170 °C, pendant une durée de 2 à 10 minutes, de préférence de 5 minutes.

43. Procédé selon la revendication 41, dans lequel on utilise en tant que moyen d'étanchéité un koxy perfluoré (PFA), qui est traité à une température située dans une plage de 280 °C à 320 °C, pendant une durée de 5 à 15 minutes, de préférence de 10 minutes.
